## Europäisches Patentamt
## European Patent Office
## Office européen des brevets

(19)

(11) Publication number: **0 162 728**
**B1**

(12)

# EUROPEAN PATENT SPECIFICATION

(45) Date of publication of patent specification: **02.08.89**

(51) Int. Cl.⁴: **G 01 N 1/22**

(21) Application number: **85303694.5**

(22) Date of filing: **24.05.85**

(54) **High temperature sample probe.**

(30) Priority: **24.05.84 US 613500**

(43) Date of publication of application:
**27.11.85 Bulletin 85/48**

(45) Publication of the grant of the patent:
**02.08.89 Bulletin 89/31**

(84) Designated Contracting States:
**DE FR GB IT SE**

(56) References cited:
**DE-A-1 813 518**
**PATENTS ABSTRACTS OF JAPAN, vol. 4, no.
66 (P-11) 548r, 17th May 1980 & JP - A - 55 35
255**
**PATENTS ABSTRACTS OF JAPAN, vol. 5, no.
69 (P-60) 741r, 9th May 1981 & JP - A - 56 19 432**
**MECHANICAL ENGINEERING, vol. 96, no. 5,
May 1974, pages 43-48, New York, US; P.C.
WOLF: "Systems for continuous stackgas
monitoring; part 2: Gas-handling components
and accessories"**
(73) Proprietor: **THE BABCOCK & WILCOX
COMPANY**
**1010 Common Street P.O. Box 60035
New Orleans Louisiana 70160 (US)**

(72) Inventor: **Bohl, Thomas L.
306 Hyder Drive
Madison Ohio 44057 (US)**

(74) Representative: **Purvis, William Michael
Cameron et al
D. Young & Co. 10 Staple Inn
London WC1V 7RD (GB)**
(56) References cited:
**ISA TRANSACTIONS, vol. 17, no. 4, 1978, pages
15-20, Pittsburg, US; J.C. LAIRD et al.: "Unique
extractive stack sampling system for
continuous emission monitoring"**

Courier Press, Leamington Spa, England.

EP 0 162 728 B1

# Description

The invention relates to gas analyzers an particularly to a sample probe which can be used to provide gases to an analyzer from a high temperature environment.

Probes for gas analyzers have been previously proposed to conduct gases to be analyzed from an environment containing the gases to an analyzer for analyzing the gases.

As the gas analyzers become more complicated, it is increasingly important to filter out small particles in a sample stream before the gas of the stream can be analyzed. Filters for use at temperatures below 815°C (1500°F) are well known. Composite metal filters are used with newly designed flexible ceramic filter materials.

In applications where temperatures exceed 815°C (1500°F), however, such as in a steel mill soaking pit, metal loses its strength and ceramic fibres become brittle with the passage of time. Filters constructed from alumina (Al$_2$O$_3$) ceramic tubes covered with flexible ceramic fibre material have been tested in soaking pits. These have resulted in fractures of the tubes and embrittlement of the fibres.

U.S. Patent 4,161,883 utilizes an internal filter which requires almost continuous blowback. Liquids in a sample to be analyzed must be condensed out before the sample is provided to the analyzer.

U.S. Patent 4,079,622 discloses a jacketed sample probe for cooling a sample so that smoke can be collected on filter paper. Only a batch sample can thus be provided and no continuous supply of a sample is possible.

Other sample probes are disclosed by U.S. Patents 3,549,327 and 4,147,500. Both advocate condensing liquids from the sample before the sample can be analyzed.

A "wet" analysis of a sample is thus not possible in the prior art sampling probes. Analysis of the condensed out liquids thus cannot be made, such as analysis of acids which may be in the original sample but which are condensed out before the sample is provided to the analyzer.

"Mechanical Engineering" Vol. 96 No.5 May 1974 pages 43 to 48 discloses a steam jacketed sampling probe for sampling stack gases. Water enters an outer passage of the probe and evaporates thereby cooling the probe which is a stainless steel tube, possibly coated with ceramic oxide, flanged to a housing containing the filter.

Patents abstract of Japan Vol. 4 No. 66 page 11 548 shows an abstract of Japanese Application 55—35255 wherein heat pipes are provided in a sampling filter collector for exhaust gas, the heat pipes being in contact with a soaking pit cylinder to radiate excess heat to maintain a filter at a temperature lower than the dewpoint of the gas.

The invention has among its objects to provide a sample probe which includes a filter and which can be utilized to sample gases from a high temperature environment, such as a steel mill soaking pit, where the atmosphere may be at 1650°C (3000°F).

According to the invention there is provided a high temperature sample probe for a gas analyzer having a mounting flange with an inlet port, comprising:

a filter having one closed end and an opposite end connected to the mounting flange and communicating with the inlet port;

a heat resistant tube having one open end to communicate with a high temperature environment and an opposite open end;

mounting means engaged around the tube for connecting the analyzer to a container for the high temperature environment; and

cooling passage means connected between said opposite open end of the tube and the analyzer mounting flange for defining a cooling passage, the filter being disposed in the cooling passage and the cooling passage being sufficiently long to permit cooling, of a sample moving into said one open end of the tube before it reaches the filter, to a degree sufficient to avoid heat destruction of the filter but not sufficient to cause condensation of liquids from the gas.

Such a sample probe exposes a minimum amount of hardware to the extreme temperature environment with the filter being provided in a cooler part of the system. Tubular materials are used which can continuously withstand oxidizing and reducing atmospheres of 1650°C (3000°F). No reliable filter material is known which can withstand such an environment. Therefore, the filtering operation for the analyzer is provided at the end of the tube where the temperatures are reduced to about 315°C (600°F). In this lower temperature region a conventional metal or ceramic fibre filter can be utilized.

The temperature is still sufficiently high to be above the dew point of various substances, such as acids, in the stream to be tested.

The inventive combination is unique in that high temperature gases can be sampled and filtered in a very simple manner. No complex or exotic piping arrangements, scrubbers or other systems are required to accomplish the sampling/filtering operation.

The cooling passage means defines a cooling passage which contains the filter and gases entering the cooling passage from said opposite open end of the heat resistant tube will be at a temperature which is sufficiently high to prevent condensation of liquids from the sample yet sufficiently low to prevent damage to the filter.

The sample probe can be simple in design, rugged in construction and economical to manufacture.

The invention is diagrammatically illustrated by way of example in the accompanying drawings, in which:-

Figure 1 is a sectional view of a high temperature sample probe according to the invention;

Figure 2 is a view taken on line 2—2 of Figure 1;

Figure 3 is a view similar to Figure 1 of another embodiment of the invention:

Figure 4 is a side elevational view of a mounting flange for supporting a heat resistant tube of a sample probe according to the invention; and

Figure 5 is a fragmentary sectional view of another embodiment of the invention showing a connection between a heat resistant tube, a flange and a threaded type nipple.

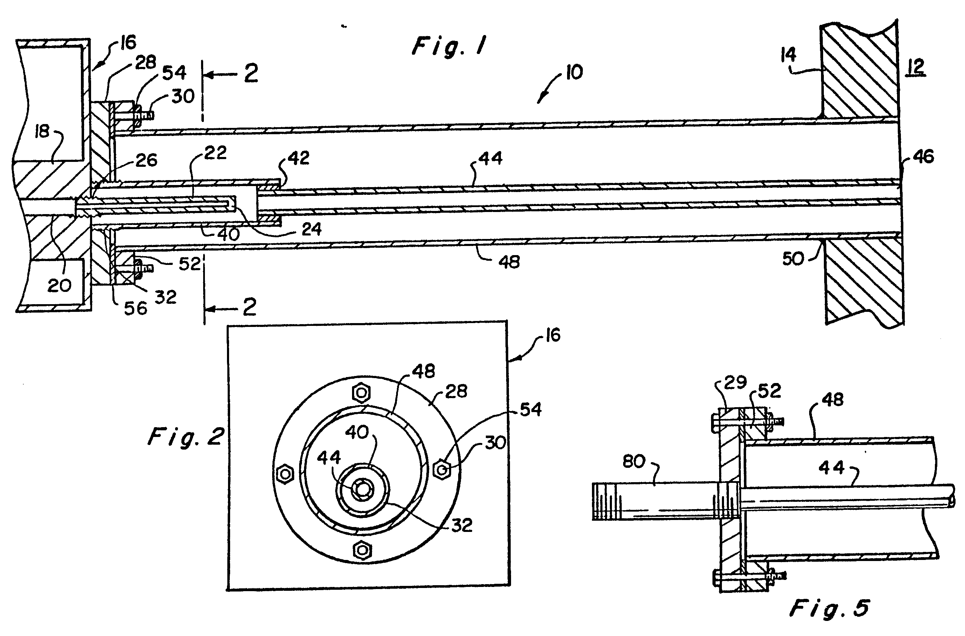

Referring to the drawings and firstly to Figures 1 and 2, a high temperature sample tube generally designated 10 is provided for conducting a sample gas from a high temperature environment, in this case a steel mill soaking pit 12 which is closed by a pit wall 14, to a gas analyzer generally designated 16.

The gas analyzer 16 which is known in the art and details of which are not here provided, includes an analyzer block 18 having an inlet port 20 therein. A filter 22 has a first closed end 24 and a second threaded and open end 26 which is threaded into the port 20. The filter 22 may be a sintered metal filter, a screen filter or a filter made of ceramic fibres. The filter 22 must be capable of withstanding relatively high temperatures, for example up to 315°C (600°F), but need not be capable of resisting temperatures as high as 1650°C (3000°F) which exist in the steel mill soaking pit 12. The filter 22 may be rigid or flexible.

The analyzer 16 includes a mounting flange 28 having bolts 30 extending therefrom. An offcentre internally threaded opening 32 is provided in the flange 28 for threadably receiving a stainless steel pipe 40. The pipe 40 defines part of a cooling passage which contains the filter 22 and is connected through high temperature ceramic cement 42, to a heat resistant tube 44 made, for example of silicon-carbide alloy. The tube 44 has an open end 46 which communicates with the pit 12 and conducts a sample gas to a cooling chamber defined by the pipe 40. The analyzer flange 28 is connected to the wall 14 by a larger diameter pipe 48 which is welded at 50 to the wall 14 and is fixedly connected to a pipe flange 52. The pipe flange 52 is engaged and fixed to the bolts 30 by nuts 54. A high temperature gasket 56 separates the mounting flange 28 from the pipe flange 52.

The length of the passage in the pipe 40 as well as the space in the pipe 48 are chosen to be sufficiently long that the temperature of the sample gas entering the inlet end 46 of the tube 44 cools to a temperature which is low enough to avoid destruction of the filter 22 yet still high enough to avoid condensation of liquids, in particular acids in the sample gas, i.e. the sample gas is maintained above the dew point temperature of vapours therein.

Figure 2 shows the offcentre mounting of tube 44 and pipe 40 in mounting flange 28. The tube 44 is for example 1070 mm (42 inches) long and the pipe 48 can for example be a 76 mm (3 inch) diameter pipe with the mounting flange 52 suitably dimensioned.

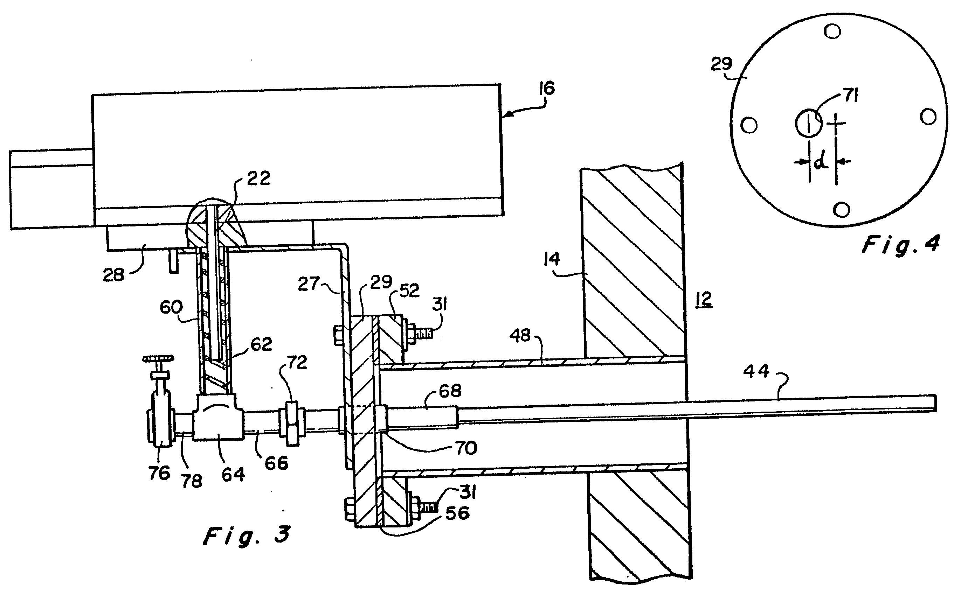

Figure 3 illustrates another embodiment of the invention. The same numerals are utilized in Figure 3 as in Figures 1 and 2 to represent corresponding parts.

In Figure 3, the high temperature resistant tube 44 extends some distance into the pit 12 through the wall 14. The pipe 48 connected to its mounting flange 52 is connected to an intermediate flange 29 by bolt and nut combinations 31. A high temperature gasket 56 separates the flanges 52 and 29. A bracket 27 is bolted to both the intermediate flange 29 and the analyzer mounting flange 28. The filter 22 is threaded into the analyzer inlet port and depends vertically downwardly. This position of the filter reduces fouling of the filter by particles.

A stainless steel pipe 60 defines a cooling passage which receives the filter 22. A heater coil 62 is also provided in the passage to maintain the temperature of the sample gases above a condensation temperature, in case the sample gases become overly cooled in their journey from the pit 12 to the analyzer 16.

The stainless steel tube 60 is connected by a T-connection 64 to a nipple 66. A further stainless steel nipple 68 extends through a coupling 70 and is welded thereto. The coupling 70 is welded to the flange 29.

The nipples 66 and 68 are connected by a threaded union 72 so that they may be easily disconnected for access to the tube 44. A gate or ball valve 76 is connected to the T-connection 64 by another nipple 78. The gate or ball valve 76 can be opened for access and cleaning of the T-connection 64 as well as the tube 44. Particles from the filter 22 may accumulate in this area. The valve 76 can thus be used for a blowback operation or a mechanical cleaning operation.

It is noted that a clearance is maintained between the pit wall 14 and the analyzer 16 to prevent overheating of the analyzer. An increased temperature drop is also provided by the added length of the cooling passage which includes the internal passages defined by the nipples 66 and 68 as well as the T-connection 64 and the union 72.

Figure 4 shows the opening 71 in the intermediate flange 29 which is offset by a distance of about 19 mm (3/4 of an inch) shown at *d* from the centre of the flange 29. The flange 29 is provided with suitable openings for the nut and bolt combinations 31. The embodiment of Figure 5 differs from that of Figure 3 only in that the further pipe nipple 68 is replaced by a nipple 80 which is threaded at both ends. The nipple 80 can this join the union 72 in Figure 3 and also be threaded to the intermediate flange 29. The heat resistant tube 44 is directly connected to the nipple 80 by threading or high temperature ceramic cement. The embodiment of Figure 5 permits the removal and replacement of the tube 44 simply by unthreading the union 72, pivoting the T-connection 64 out of the way and unthreading the nipple 80 from the intermediate flange 29. In this way the analzer may remain mounted while the tube 44 is replaced or cleaned.

**Claims**

1. A high temperature sample probe for a gas analyzer (16) having a mounting flange (28) with an inlet port (20), comprising:

a filter (22) having one closed end (24) and an opposite end (26) connected to the mounting flange (28) and communicating with the inlet port (20);

a heat resistant tube (44) having one open end (46) to communicate with a high temperature environment (12) and an opposite open end;

mounting means (48) engaged around the tube (44) for connecting the analyzer (16) to a container (14) for the high temperature environment (12); and

cooling passage means (40, 60) connected between said opposite open end of the tube (44) and the analyzer mounting flange (28) for defining a cooling passage, the filter (22) being disposed in the cooling passage (40, 60) and the cooling passage being sufficiently long to permit cooling, of a sample moving into said one open end (46) of the tube (44) before it reaches the filter (22), to a degree sufficient to avoid heat destruction of the filter (22) but not sufficient to cause condensation of liquids from the gas.

2. A sample probe according to claim 1, wherein the mounting means comprises a large diameter pipe (48) connected between the mounting flange (28) and the container (14).

3. A sample probe according to claim 1 or claim 2, wherein the cooling passage means comprises a pipe (4) connected to the tube (44) at said opposite open end of the tube by high temperature resistant cement (42), the pipe (40) being threaded to the analyzer mounting flange (28).

4. A sample probe according to any one of claims 1 to 3, wherein the tube (44) is made of silicon-carbide alloy and the filter (22) is made of sintered metal.

5. A sample probe according to claim 2, wherein the mounting means includes an intermediate flange (29) connected to the large diameter pipe (48) and a bracket (27) connected between the intermediate flange (29) and the analyzer mounting flange (28), the bracket (27) establishing a selected angle between the intermediate flange (29) and the mounting flange (28), the cooling passage means comprising a first nipple (66, 68) connected to the heat resistant tube (44) and to the intermediate flange (29), a pipe (60) connected to the mounting flange (28), forming the cooling passage means and defining a space containing the filter (22), and a T-connection (64) connected between the first nipple (66, 68) and the pipe (60).

6. A sample probe according to claim 5, including a further nipple (78) connected to the T-connection (64) and a valve (76) connected to the further nipple (78) for providing access to the cooling passage (60).

7. A sample probe according to claim 6, including a union (72) in the first nipple dividing the first nipple into a first part (68) connected to the tube (44) and a second part (66) connected to the T-connection (64), the first part (68) being threaded to the intermediate flange (29) for removal of the tube (44) from the mounting means (48).

8. A sample probe according to claim 6, including heating means (62) connected to the pipe (60) for heating the cooling passage to maintain a temperature of the sample entering the filter (22) above a dew point temperature of vapours in the sample.

**Patentansprüche**

1. Hochtemperatur-Probensonde für einen Gasanalysator (16) mit einem Befestigungsflansch (28) und einem Einlaßanschluß (20), sowie mit:

einem Filter (22), der ein geschlossenes Ende (24) und ein gegenüberliegendes Ende (26) hat, welches an den Befestigungsflansch (28) angeschlossen ist und mit dem Einlaßanschluß (20) in Verbindung steht;

einem hitzebeständigen Rohr (44), mit einem offenen Ende (46), für die Verbindung mit einer Umgebung (12) unter hoher Temperatur sowie mit einem gegenüberliegenden offenen Ende; Befestigungsmitteln (48), die für den Anschluß des Analysators (16) an einen Behälter (14) für die Hochtemperaturumgebung (12) um das Rohr (44) herum in Eingriff stehen; und

Kühldurchgangsmitteln (40, 60), welche zwischen dem gegenüberliegenden offenen Ende des Rohres (44) und dem Befestigungsflansch (28) des Analysators angeschlossen sind, un so einen Kühldurchgang zu definieren, wobei der Filter (22) in dem Kühldurchgang (40, 60) angeordnet ist und der Kühldurchgang ausreichend lang ist um das Kühlen einer Probe zu erlauben, welches sich in das offene Ende (46) des Rohres (44) hineinbewegt, bevor sie den Filter (22) erreicht, und zwar auf eine Maß, welches ausreichend ist, um die Zerstörung des Filters (22) durch Hitze zu vermeiden, jedoch nicht ausreicht, die Kondensation von Flüssigkeiten aus dem Gas zu bewirken.

2. Probensonde nach Anspruch 1, wobei die Befestigungsmittel ein Rohr (48) mit großen Durchmesser aufweisen, welches zwischen dem Befestigungsflansch (28) und dem Behälter (14) angeschlossen ist.

3. Probensonde nach Anspruch 1 oder 2, wobei die Kühldurchgangsmittel eine Röhre (40) aufweisen, welche an das Rohr (44) an dem offenen Ende des Rohres mit hitzebeständigem Zement (42) angeschlossen ist, wobei die Röhre (40) an den Befestigungsflansch (28) des Analysators geschraußt ist.

4. Probensonde nach einem der Ansprüche 1 bis 3, wobei das Rohr (44) aus einer Siliziumkarbidlegierung und der Filter (22) aus gesintertem Metall hergestellt sind.

5. Probensonde nach Anspruch 2, wobei die Befestigungsmittel einen Zwischenflansch (29) aufweisen, welcher an die Röhre (48) mit großem Durchmesser angeschlossen ist, sowie einen Träger (27), welcher zwischen dem Zwischenflansch (29) und dem Befestigungsflansch (28) des Analysators angeschlossen ist, wobei der Träger (27) einen ausgewählten Winkel zwischen dem Zwischenflansch (29) und dem Befestigungsflansch (28) herstellt, die Kühldurchgangsmittel einen ersten Nippel (66, 68) aufweisen, der an das hitzebeständige Rohr (44) und den Zwischenflansch (29) angeschlossen ist, eine Röhre (60) aufweisen, welche an den Befestigungsflansch (28) angeschlossen ist, die Kühldurchgangsmittel bildet und einen den Filter (22) enthaltenden Raum definiert, und einen T-Anschluß (64) aufweist, welcher zwischen dem ersten Nippel (66, 68) und der Röhre (60) angeschlossen ist.

6. Probensonde nach Anspruch 5, welche einen weiteren Nippel (68) aufweist, welcher mit dem T-Anschluß (64) verbunden ist sowie mit einem Ventil (76), welches an dem weiteren Nippel (78) angeschlossen ist, um einen Zugang zu dem Kühldurchgang (60) zu gewähren.

7. Probensonde nach Anspruch 6, welche einen Anschluß (72) in dem ersten Nippel einschließt, welcher den ersten Nippel in einen ersten Teil (68) aufteilt, der an das Rohr (44) angeschlossen ist, und einen zweiten Teil (66), der mit dem T-Anschluß (64) verbunden ist, wobei der erste Teil (68) an den Zwischenflansch (29) geschraubt ist, um das Rohr (44) von den Befestigungsmitteln (48) abzunehmen.

8. Probensonde nach Anspruch 6, welche eine Heizeinrichtung (62) einschließt, welche mit der Röhre (60) zum Heizen des Kühldurchgangs, um die Temperatur der in den Filter (22) eintretenden Rohre oberhalb des Taupunktes von Gasen in der Probe zu halten, verbunden ist.

## Revendications

1. Sonde de prélèvement d'échantillon à température élevée pour un analyseur de gaz (16) possédant une bride de fixation (28) avec un orifice d'admission (20), comportant:
   un filtre (22) possédant une extrémité fermée (24) et une extrémité opposée (26) reliée à la bride de fixation (28) et communiquant avec l'orifice d'admission (20);
   un tube (44) résistant aux températures élevées possédant une extrémité ouverte (46) pour communiquer avec un environnement (12) à température élevée et une extrémité ouverte opposée;
   des moyens de fixation (48) engagés autour du tube (44) pour relier l'analyseur (16) à un récipient (14) pour l'environnement (12) à température élevée; et
   des moyens de passage de refroidissement (40, 60) disposés entre ladite extrémité ouverte opposée du tube (44) et la bride de fixation (28) de l'analyseur pour délimiter un passage de refroidissement, le filtre (22) étant disposé dans le passage de refroidissement (40, 60) et le passage de refroidissement étant suffisamment long pour permettre un refroidissement d'un échantillon se déplaçant dans ladite extrémité ouverte (46) du tube (44) avant qu'il n'atteigne le filtre (22), à un degré suffisant pour éviter une destruction thermique du filtre (22) mais insuffisant pour provoquer une condensation de liquides à partir du gaz.

2. Sonde de prélèvement d'échantillon selon la revendication 1, dans laquelle les moyens de fixation comportent un tuyau (48) de grand diamètre disposé entre la bride de fixation (28) et le récipient (14).

3. Sonde de prélèvement d'échantillon selon la revendication 1 ou la revendication 2, dans laquelle les moyens de passage de refroidissement comportent un tuyau (4) relié au tube (44) à ladite extrémité ouverte opposée du tube par un ciment (42) résistant aux températures élevées, le tuyau (40) étant vissé sur la bride de fixation (28) de l'analyseur.

4. Sonde de prélèvement d'échantillon selon l'une quelconque des revendications 1 à 3, dans laquelle le tube (44) est réalisé en alliage de carbure de silicium et le filtre (22) est réalisé en méal fritté.

5. Sonde de prélèvement d'échantillon selon la revendication 2, dans laquelle les moyens de fixation comprennent une bride intermédiaire (29) reliée au tuyau (48) à grand diamètre et une support (27) disposé entre la bride intermédiaire (29) et la bride de fixation (28) de l'analyseur, le support (27) établissant un angle choisi entre la bride intermédiaire (29) et la bride de fixation (29), les moyens de passage de refroidissement comportant un premier raccord (66, 68) relié au tube (44) résistant aux températures élevées et à la bride intermédiaire (28), un tuyau (60) relié à la bride de fixation (28), formant les moyens de passage de refroidissement et délimitant un espace contenant le filtre (22), et une liaison en T(64) disposée entre le premier raccord (66, 68) et le tuyau (60).

6. Sonde de prélèvement d'échantillon selon la revendication 5, comprenant un autre raccord (78) relié à la liaison en T (64) et une vanne (76) reliée à l'autre raccord (78) pour assurer un accès au passage de refroidissement (60).

7. Sonde de prélèvement d'échantillon selon la revendication 6, comprenant une liaison (72) dans le premier raccord divisant ce dernier en une première partie (68) reliée au tube (44) et une second partie (66) reliée à la liaison en T (64), la première partie (68) étant vissée sur la bride intermédiaire (29) en vue d'une retrait du tube (44) des moyens de fixation (48).

8. Sonde de prélèvement d'échantillon selon la revendication 6, comprenant des moyens de chauffage (62) reliés au tuyau (60) en vue de chauffer le passage de refroidissement pour maintenir une température de l'échantillon pénétrant dans le filtre (22) au-dessus d'un température de point de rosée de vapeurs dans l'échantillon.

Fig. 1

Fig. 2

Fig. 5

EP 0 162 728 B1

EP 0 162 728 B1

Fig. 3

Fig. 4